# DEMANDE DE BREVET EUROPEEN

(11) **EP 0 933 291 A1**
(43) Date de publication de la demande: **04.08.1999**
(21) Numéro de dépôt: 99400197.2
(22) Date de dépôt: 28.01.1999
(51) Int. Cl.: B62K 19/30, B62M 23/02, B60K 1/04

(54) **Véhicule à propulsion électrique**

(30) Priorité: 29.01.1998 FR 9800986
(71) Demandeur: Carre, Denis, 86200 Loudun (FR)
(72) Inventeur: Carre, Denis, 86200 Loudun (FR)
(74) Mandataire: Bonnetat, Christian

(57) **Abrégé**

- La présente invention concerne un véhicule à propulsion électrique, comportant au moins deux roues, un châssis, et des moyens embarqués d'alimentation en énergie électrique.
- Selon l'invention, lesdits moyens d'alimentation en énergie électrique (9) sont logés dans une structure rigide (10) apte à être fixée (11) de façon amovible audit châssis (2) en contribuant à la rigidité globale de ce dernier.

## Description

La présente invention concerne un véhicule à propulsion électrique.

Plus particulièrement, quoique non exclusivement, l'invention se rapporte à un véhicule à deux ou trois roues (notamment du type scooter) à propulsion électrique. Plus précisément, l'énergie servant à propulser le véhicule est du type électrique basse tension, fournie par des batteries embarquées.

Jusqu'à présent, les matériels alimentés par ce type d'énergie sont généralement réalisés sous la forme d'une structure métallique dans laquelle sont logées les batteries, structure communément dénommée « châssis ». De plus, les batteries sont emprisonnées dans l'habillage du véhicule et ne sont pas directement accessibles.

En outre, le poids des batteries, qui reste important, nécessite un renforcement du châssis. En terme d'utilisation, les batteries sont chargées par le secteur, sous une tension définie, par l'intermédiaire d'un chargeur, le plus souvent intégré au véhicule. Par conséquent, dès que les batteries sont déchargées, le véhicule est immobilisé le temps de la charge.

La présente invention a pour but d'éviter ces inconvénients.

A cet effet, le véhicule à propulsion électrique, comportant au moins deux roues, un châssis, et des moyens embarqués d'alimentation en énergie électrique, est remarquable, selon l'invention, en ce que lesdits moyens d'alimentation en énergie électrique sont logés dans une structure rigide apte à être fixée de façon amovible audit châssis en contribuant à la rigidité globale de ce dernier.

En particulier, dans le cas d'un véhicule ayant au moins deux roues reliées par un cadre, notamment du type scooter, ladite structure rigide est un boîtier au moins sensiblement parallélépipédique apte à être fixé sous ledit cadre.

Ainsi, grâce à cette conception, il est possible :
- d'optimiser la réalisation du châssis (ou cadre),
- de reprendre les efforts de tension, de flexion ou de compression du châssis,
- de rendre facilement interchangeables les moyens d'alimentation en énergie, notamment des batteries, et, par conséquent, d'éviter l'immobilisation du véhicule.

Avantageusement, ledit boîtier présente, sur chaque face latérale de celui-ci, un repose-pied.

Dans le cas notamment d'un scooter, l'ensemble boîtier-batteries devient un ensemble combiné à plusieurs fonctions :
. rigidité du châssis,
. maintien des batteries en bloc,
. protection des batteries,
. repose-pied pour le pilote,
. élément esthétique du véhicule.

De plus, une telle conception permet d'intégrer plusieurs types de batteries dans un boîtier identique.

Par ailleurs, la fixation dudit boîtier audit cadre peut être assurée par des moyens de fixation par vissage, par emboîtement ou par verrouillage.

Dans le premier cas, lesdits moyens de fixation par vissage comportent, d'une part, une chape et, d'autre part, un boulon pivotant dont l'écrou est destiné à être serré sur ladite chape.

Dans le deuxième cas, lesdits moyens de fixation par emboîtement comportent, d'une part, un ergot et, d'autre part, un loquet articulé pour s'emboîter sur ledit ergot.

Dans le troisième cas, lesdits moyens de fixation par verrouillage comportent, d'une part, une chape et, d'autre part, un ergot, une tige, munie d'une butée et d'un perçage, étant destinée à traverser des perçages correspondants de ladite chape et, passant sous ledit ergot, à fixer ce dernier à ladite chape grâce à une goupille fendue traversant ledit perçage de ladite tige.

Les figures du dessin annexé feront bien comprendre comment l'invention peut être réalisée. Sur ces figures, des références identiques désignent des éléments semblables.

La figure 1 illustre schématiquement un véhicule à deux roues, du type scooter, dont le boîtier, recevant les batteries, n'est pas assemblé au cadre dudit véhicule.

La figure 2 est une figure semblable à la figure 1, montrant le boîtier assemblé et fixé au cadre du véhicule.

Les figures 3A, 3B illustrent, respectivement en position avant assemblage de l'ensemble boîtier-batteries au cadre et en position assemblée, des premiers moyens de fixation par vissage.

Les figures 4A, 4B illustrent, respectivement en position avant assemblage de l'ensemble boitier-batteries au cadre et en position assemblée, des deuxièmes moyens de fixation par emboîtement.

Les figures 5A, 5B montrent, respectivement en position avant assemblage de l'ensemble boîtier-batteries au cadre et en position assemblée, des troisièmes moyens de fixation par verrouillage.

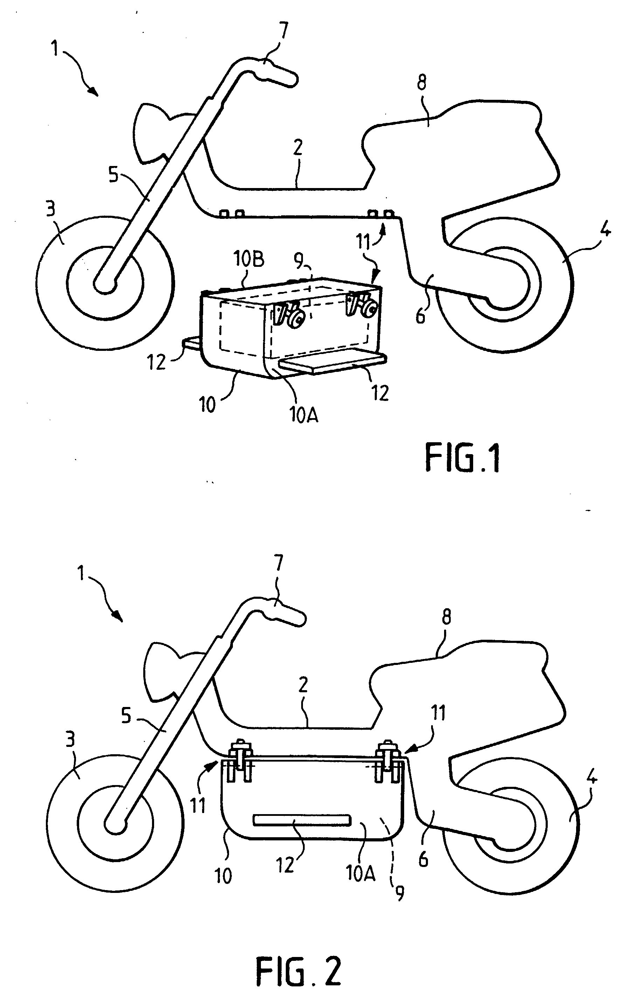

Sur les figures 1 et 2, il est représenté schématiquement un véhicule à deux roues, du type scooter, à propulsion électrique selon l'invention.

Le véhicule 1 comporte, comme cela est usuel, un châssis (ou cadre) 2, reliant deux roues avant 3 et arrière 4, par l'intermédiaire d'une suspension avant 5 et d'une suspension arrière 6, respectivement. A titre purement indicatif, le guidon et la selle sont désignés de plus par les références numériques 7 et 8, respectivement.

Le véhicule 1 présente, par ailleurs, des moyens embarqués d'alimentation en énergie électrique 9, notamment des batteries, logés dans un boîtier 10 au moins sensiblement parallélépipédique apte à être fixé sous le cadre 2 par des moyens de fixation 11, dont quelques exemples de réalisation seront décrits en détail ci-après.

En outre, le boîtier 10 présente, sur chaque face latérale 10A, 10B de celui-ci, un repose-pied 12.

Les figures 1 et 2 illustrent bien la facilité de pose et de dépose de l'ensemble boîtier-batteries, ainsi que, en particulier la figure 2, l'intégration de cet ensemble au châssis (ou cadre) 2, participant aux différentes fonctions de ce dernier, comme déjà indiqué précédemment.

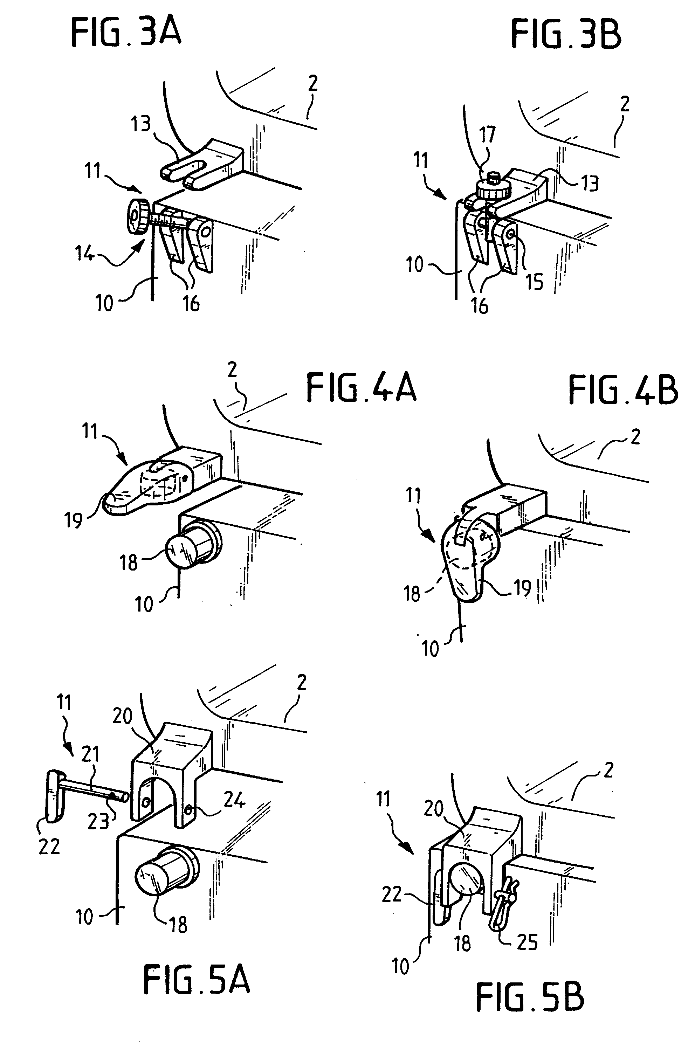

Les figures 3A, 3B illustrent, respectivement en position avant assemblage de l'ensemble boîtier-batteries au cadre et en position assemblée, des premiers moyens de fixation 11 par vissage.

Dans ce cas, les premiers moyens de fixation 11 comportent, d'une part, une chape 13 fixée au cadre 2, et, d'autre part, un boulon 14 pivotant sur un axe 15 fixé au boîtier 10 par des pattes 16. Le serrage de l'écrou 17 du boulon 14 sur la chape 13, après pivotement de ce dernier (figure 3B), permet la fixation du boîtier 10 au cadre 2. Il est bien entendu que de tels moyens 11 sont avantageusement prévus pour assurer quatre points de fixation du boîtier au cadre, et que la chape 13 et le boulon 14 pourraient être également prévus sur le boîtier 10 et le cadre 2, respectivement.

Les figures 4A, 4B illustrent, respectivement en positon avant assemblage de l'ensemble boîtier-batteries au cadre et en position assemblée, des deuxièmes moyens de fixation 11 par emboîtement.

Dans ce cas, les deuxièmes moyens de fixation 11 comportent, d'une part, un ergot 18 fixé au boîtier 10 et, d'autre part, un loquet 19 articulé pour s'emboîter sur l'ergot 18, fixé au cadre 2. Le pivotement du loquet 19 et son emboîtement sur l'ergot (figure 4B) permet la fixation du boîtier 10 au cadre 2. Il est bien entendu que de tels moyens 11 sont avantageusement prévus pour assurer quatre points de fixation du boîtier au cadre, et que l'ergot 18 et le loquet 19 pourraient être également prévus sur le cadre 2 et le boîtier 10, respectivement.

Les figures 5A, 5B illustrent, respectivement en position avant assemblage de l'ensemble boîtier-batteries au cadre et en position assemblée, des troisièmes moyens de fixation 11 par verrouillage.

Dans ce cas, les troisièmes moyens de fixation 11 comportent, d'une part, une chape 20 fixée au cadre 2 et, d'autre part, un ergot 18 fixé au boîtier 10, une tige 21, munie d'une butée 22 et d'un perçage 23, étant destinée à traverser des perçages 24 correspondants de la chape 20 et, passant sous l'ergot 18 (figure 5B), à fixer ce dernier à la chape 20 grâce à une goupille fendue 25 traversant le perçage 23. Comme précédemment, il est bien entendu que de tels moyens 11 sont avantageusement prévus pour assurer quatre points de fixation du boîtier au cadre, et que la chape 20 et l'ergot 18 pourraient être également prévus sur le boîtier 10 et le cadre 2, respectivement.

## Revendications

1. Véhicule à propulsion électrique, comportant au moins deux roues, un châssis, et des moyens embarqués d'alimentation en énergie électrique, logés dans une structure apte à être fixée de façon amovible audit châssis,
caractérisé en ce que ladite structure (10) est rigide et contribue à la rigidité globale dudit châssis (2) lorsqu'elle est fixée sur ce dernier.

2. Véhicule selon la revendication 1, ayant au moins deux roues reliées par un cadre,
caractérisé en ce que ladite structure rigide est un boîtier (10) au moins sensiblement parallélépipédique apte à être fixé sous ledit cadre (2).

3. Véhicule selon la revendication 2,
caractérisé en ce que ledit boîtier (10) présente, sur chaque face latérale (10A,10B) de celui-ci, un repose-pied.

4. Véhicule selon l'une quelconque des revendications 1 à 3,
caractérisé en ce que lesdits moyens d'alimentation en énergie électrique comprennent au moins une batterie (9).

5. Véhicule selon l'une quelconque des revendications 2 à 4,
caractérisé en ce que la fixation dudit boîtier (10) audit cadre (2) est assurée par des moyens de fixation (11) par vissage.

6. Véhicule selon la revendication 5,
caractérisé en ce que lesdits moyens de fixation (11) par vissage comportent, d'une part, une chape (13) et, d'autre part, un boulon pivotant (14) dont l'écrou (17) est destiné à être serré sur ladite chape (13).

7. Véhicule selon l'une quelconque des revendications 2 à 4,
caractérisé en ce que la fixation dudit boîtier (10) audit cadre (2) est assurée par des moyens de fixation (11) par emboîtement.

8. Véhicule selon la revendication 7,
caractérisé en ce que lesdits moyens de fixation (11) par emboîtement comportent, d'une part, un ergot (18) et, d'autre part, un loquet (19) articulé pour s'emboîter sur ledit ergot (18).

9. Véhicule selon l'une quelconque des revendications 2 à 4,
caractérisé en que la fixation dudit boîtier (10) est assurée par des moyens de fixation (11) par verrouillage.

10. Véhicule selon la revendication 9,
caractérisé en ce que lesdits moyens de fixation (11) par verrouillage comportent, d'une part, une chape (20) et, d'autre part, un ergot (18), une tige (11), munie d'une butée (22) et d'un perçage (23), étant destinée à traverser des perçages (24) correspondants de ladite chape (20) et, passant sous ledit ergot (18), à fixer ce dernier à ladite chape (20) grâce à une goupille fendue (25) traversant ledit perçage (23) de ladite tige.
